# EUROPEAN PATENT APPLICATION

(11) **EP 4 468 403 A1**
(43) Date of publication of application: **27.11.2024**
(21) Application number: 22956994.2
(22) Date of filing: 02.09.2022
(51) Int. Cl.: H01M 4/1397, H01M 4/58

(54) **AMMONIUM MANGANESE IRON PHOSPHATE PRECURSOR AND PREPARATION METHOD THEREFOR, LITHIUM MANGANESE IRON PHOSPHATE POSITIVE ELECTRODE ACTIVE MATERIAL, AND SECONDARY BATTERY**

(71) Applicant: Contemporary Amperex Technology (Hong Kong) Limited, Central, Central And Western District (HK)
(72) Inventor: LIU, Shaojun, Ningde, Fujian 352100 (CN); ZHAN, Wenwei, Ningde, Fujian 352100 (CN); ZHANG, Xinxin, Ningde, Fujian 352100 (CN); OUYANG, Chuying, Ningde, Fujian 352100 (CN); LI, Qingzheng, Ningde, Fujian 352100 (CN)
(74) Representative: Jacob, Reuben Ellis
(86) International application number: PCT/CN2022/116803
(87) International publication number: WO 2024/045174

(57) **Abstract**

The present application discloses an ammonium manganese iron phosphate precursor and a preparation method therefor, a lithium manganese iron phosphate positive electrode active material, and a secondary battery. The preparation method for the ammonium manganese iron phosphate precursor comprises the following steps: mixing and grinding metal source powder and phosphorus source powder to make components undergo a low-heat solid-phase reaction, and after the grinding is ended, washing and drying an obtained product to obtain the ammonium manganese iron phosphate precursor, wherein metal sources comprise an iron source, a manganese source, and an optional source of doping element M, M represents doping elements of manganese and iron sites, and phosphorus source comprises triammonium phosphate. According to the preparation method provided by the present application, the ammonium manganese iron phosphate precursor having regular morphology, small particle size, narrow particle size distribution, uniform element distribution, high purity, compositions that can be easily and precisely controlled, and high batch stability and consistency can be obtained, and thus the lithium manganese iron phosphate positive electrode active material and the secondary battery which are prepared from the ammonium manganese iron phosphate precursor can have good electrochemical performance.

## Description

### TECHNICAL FIELD

The present application belongs to the field of battery technology, and specifically relates to an ammonium manganese iron phosphate precursor, a lithium manganese iron phosphate positive electrode active material, a preparation method thereof, and a secondary battery.

### BACKGROUND

In recent years, secondary batteries have been widely used in energy storage power systems such as hydropower, firepower, wind power, and solar power plants, and in many fields of electric tools, electric bicycles, electric motorcycles, electric vehicles, military equipment, aerospace, and the like. Lithium manganese iron phosphate positive electrode active materials have become one of the most concerned positive electrode active materials due to their advantages of high capacity, good safety performance, abundant raw material sources, and the like. Positive electrode active material precursors are one of the key factors affecting performances of positive electrode active materials. However, precursors of existing positive electrode active materials are mostly prepared by liquid-phase co-precipitation, and therefore, often have defects such as irregular morphology, large particle size, wide particle size distribution, uneven element distribution and poor batch stability and consistency, which affect electrochemical performances of lithium manganese iron phosphate positive electrode active materials and secondary batteries.

### SUMMARY

The present application aims to provide an ammonium manganese iron phosphate precursor, a lithium manganese iron phosphate positive electrode active material, a preparation method thereof, and a secondary battery. The preparation method for an ammonium manganese iron phosphate precursor provided by the present application is simple, low-cost, high in yield, low in post-treatment process difficulties, environment-friendly, energy-saving and prone to amplified production, and can obtain the manganese iron phosphate precursor with regular morphology, small particle size, narrow particle size distribution, uniform element distribution, high purity, easy and accurate control on composition, and high batch stability and consistency, and the lithium manganese iron phosphate positive electrode active material and secondary battery prepared therefrom can have good electrochemical performance.

A first aspect of the present application provides a method for preparing an ammonium manganese iron phosphate precursor, including the following steps: mixing and grinding metal source powder and phosphorus source powder to enable a low-heating-temperature solid-state reaction of each component, and then washing and drying the obtained product to obtain the ammonium manganese iron phosphate precursor, where the metal source includes an iron source, a manganese source and an optional source of a doping element M, M represents doping elements at manganese and iron sites and optionally includes one or more selected from Ni, Co, Mg, Zn, Ca, Ti, V and Cr, and the phosphorus source includes triammonium phosphate.

The method for preparing an ammonium manganese iron phosphate precursor provided by the present application is simple, low-cost, high in yield, low in post-treatment process difficulties, environment-friendly, energy-saving, and prone to amplified production. The ammonium manganese iron phosphate precursor obtained by the preparation method provided in the present application has the characteristics of regular morphology, small particle size, narrow particle size distribution, uniform element distribution, high purity, easy and accurate control on composition, and high batch stability and consistency.

In some embodiments of the present application, mixing and grinding time is from 0.25 h to 6 h, and optionally from 0.5 h to 6 h. This helps to promote the complete low-heating-temperature solid-state reaction and can also adjust the particle size of the obtained ammonium manganese iron phosphate precursor, thereby obtaining the nano-scale ammonium manganese iron phosphate precursor.

In some embodiments of the present application, a temperature for the low-heating-temperature solid-state reaction is from 20°C to 100°C, and optionally from 20°C to 30°C. This can reduce energy consumption and facilitate amplified production.

In some embodiments of the present application, after the mixing and grinding, a standing step is further included. Standing time is from 0.5 h to 12 h, and optionally from 2 h to 5 h; and/or a sum of the mixing and grinding time and the standing time is greater than or equal to 1.5 h, and optionally greater than or equal to 2.5 h. The standing helps to promote the complete low-heating-temperature solid-state reaction and fully crystallizes the generated ammonium manganese iron phosphate precursor.

In some embodiments of the present application, a surfactant is also added to mix and grind with the metal source powder and the phosphorus source powder, thereby adjusting the morphology and particle size of the obtained ammonium manganese iron phosphate precursor.

In some embodiments of the present application, the surfactant includes polyethylene glycol.

In some embodiments of the present application, an addition amount of the surfactant is 15 wt% or less, based on a total weight of the metal source powder and the phosphorus source powder. This helps to adjust the morphology and particle size of the obtained ammonium manganese iron phosphate precursor.

In some embodiments of the present application, before mixing and grinding metal source powder and phosphorus source powder to enable a low-heating-temperature solid-state reaction of each component, the preparation method further includes the following step: grinding the metal source powder and/or the phosphorus source powder separately to refine the reaction materials, thereby promoting the complete low-heating-temperature solid-state reaction and obtaining the ammonium manganese iron phosphate precursor with a controllable particle size. Optionally, time for grinding the metal source powder is from 0.25 h to 1.5 h. Optionally, time for grinding the phosphorus source powder is from 0.25 h to 1.5 h.

In some embodiments of the present application, a molar ratio of the metal source powder to the phosphorus source powder is 1: (1-3). By adjusting the molar ratio of the metal source powder to the phosphorus source powder, conversion efficiency of metal ions can be improved, thereby reducing difficulties in waste liquid treatment in a post-treatment process and reducing environmental pollution. Moreover, the purity of the obtained ammonium manganese iron phosphate precursor can also be improved, and the content of impurities can be reduced.

In some embodiments of the present application, the washing includes water washing and/or alcohol washing.

In some embodiments of the present application, the drying is vacuum drying.

In some embodiments of the present application, a drying temperature is from 60°C to 100°C; and/or drying time is from 8 h to 20 h.

In some embodiments of the present application, the iron source is a divalent iron salt, optionally includes one or more selected from ferrous chloride, ferrous nitrate, ferrous sulfate, and ferrous acetate.

In some embodiments of the present application, the manganese source is a divalent manganese salt, and optionally includes one or more selected from manganous chloride, manganous nitrate, manganous sulfate, and manganous acetate.

In some embodiments of the present application, the source of the doping element M is a divalent salt of the doping element M, and optionally includes one or more selected from a hydrochloride, a nitrate, a sulfate, and an acetate of the doping element M.

A second aspect of the present application provides an ammonium manganese iron phosphate precursor prepared by the method according to the first aspect of the present application, having a chemical formula NH₄FeₓMn_{y}M_{1-x-y}PO₄, in which 0 < x < 1, 0 < y < 1, 0 ≤ 1-x-y < 1, M represents doping elements at manganese and iron sites and optionally includes one or more selected from Ni, Co, Mg, Zn, Ca, Ti, V and Cr, and the ammonium manganese iron phosphate precursor is electrically neutral.

In some embodiments of the present application, the ammonium manganese iron phosphate precursor has a nano-sheet morphology, with an average length of 50 nm-800 nm and an average thickness of ≤ 100 nm.

The ammonium manganese iron phosphate precursor provided by the present application has the characteristics of regular morphology, small particle size, narrow particle size distribution, uniform element distribution, high purity, easy and accurate control on composition, and high batch stability and consistency.

A third aspect of the present application provides a method for preparing a lithium manganese iron phosphate positive electrode active material, including the following steps: S 1, mixing and grinding the ammonium manganese iron phosphate precursor prepared by the method according to the first aspect of the present application or the ammonium manganese iron phosphate precursor according to the second aspect of the present application with a lithium source, an optional source of a doping element N, an optional source of a doping element Q, and an optional source of a doping element in a predetermined ratio, and after grinding performing spray drying granulation to obtain powder, wherein N represents a doping element at a lithium site and optionally includes one or more selected from Zn, Al, Na, K, Mg, Nb, Mo and W, Q represents a doping element at a phosphorus site and optionally includes one or more selected from B, S, Si and N, and R represents a doping element at an oxygen site and optionally includes one or more selected from S, F, Cl and Br; and S2, sintering the powder obtained in S 1 to obtain the lithium manganese iron phosphate positive electrode active material.

The method for preparing a lithium manganese iron phosphate positive electrode active material, provided by the present application, can obtain the lithium manganese iron phosphate positive electrode active material with regular morphology, small particle size, narrow particle size distribution, uniform element distribution, high purity, easy and accurate control on composition, and high batch stability and consistency, and the obtained lithium manganese iron phosphate positive electrode active material can further have excellent electrochemical performance.

In some embodiments of the present application, in S 1, a carbon source is also added for mixing and grinding, and the carbon source includes one or more of organic carbon sources and inorganic carbon sources.

In some embodiments of the present application, in S 1, grinding time is from 1 h to 6 h.

In some embodiments of the present application, in S 1, a spray drying temperature is from 200°C to 250°C.

In some embodiments of the present application, in S2, the sintering includes the following steps: pre-sintering the powder obtained in S 1 at a low temperature of 350°C-500°C in an air atmosphere or a protective gas atmosphere, and then sintering the powder at a high temperature of 650°C-750°C in the protective gas atmosphere to obtain the lithium manganese iron phosphate positive electrode active material.

In some embodiments of the present application, time for the low-temperature pre-sintering is from 1 h to 6 h.

In some embodiments of the present application, time for the high-temperature sintering is from 3 h to 24 h.

In some embodiments of the present application, grinding and spray drying granulation steps are further included after the low-temperature pre-sintering and before the high-temperature sintering.

A fourth aspect of the present application provides a lithium manganese iron phosphate positive electrode active material prepared by the method according to the third aspect of the present application, having a chemical formula LiₐN_{b}FeₓMn_{y}M_{1-x-y}P₁₋ₘQₘO₄₋ₙRₙ, wherein M represents doping elements at manganese and iron sites and optionally includes one or more selected from Ni, Co, Mg, Zn, Ca, Ti, V and Cr, N represents a doping element at a lithium site and optionally includes one or more selected from Zn, Al, Na, K, Mg, Nb, Mo and W, Q represents a doping element at a phosphorus site and optionally includes one or more selected from B, S, Si and N, and R represents a doping element at an oxygen site and optionally includes one or more selected from S, F, Cl and Br; 0.9 ≤ a ≤ 1.1; 0 ≤ b ≤ 0.1, and optionally, 0.001 ≤ b ≤ 0.1; 0 < x < 1, and optionally, 0.20 ≤ x ≤ 0.50; 0 < y < 1, and optionally, 0.50 ≤ y ≤ 0.80; 0 ≤ 1-x-y < 1, and optionally, 0.001 ≤ 1-x-y ≤ 0.1; 0 ≤ m < 1, and optionally, 0.001 ≤ m ≤ 0.1; 0 ≤ n < 4, and optionally, 0.001 ≤ n ≤ 0.1; and the lithium manganese iron phosphate positive electrode active material is electrically neutral.

The lithium manganese iron phosphate positive electrode active material provided by the present application has the characteristics of regular morphology, small particle size, narrow particle size distribution, uniform element distribution, high purity, easy and accurate control on composition, and high batch stability and consistency.

A fifth aspect of the present application provides a secondary battery, including the lithium manganese iron phosphate positive electrode active material prepared by the method according to the third aspect of the present application or the lithium manganese iron phosphate positive electrode active material according to the fourth aspect of the present application.

Beneficial effects are as follows:

The inventors of the present application were surprised to discover in research that an ammonium manganese iron phosphate precursor is previously prepared by a low-heating-temperature solid-state reaction and then prepared into a lithium manganese iron phosphate positive electrode active material by a solid-state sintering process, which can simplify the preparation process, reduce costs, increase yield, reduce post-treatment process difficulties, environmental pressure and amplified production difficulties, and enables the obtained ammonium manganese iron phosphate precursor and lithium manganese iron phosphate positive electrode active material to have the characteristics of regular morphology, small particle size, narrow particle size distribution, uniform element distribution, high purity, easy and accurate control on composition, and high batch stability and consistency. Therefore, the prepared lithium manganese iron phosphate positive electrode active material and secondary battery have good electrochemical performance.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
Fig. 1 is a schematic diagram of a secondary battery according to an embodiment of the present application.
Fig. 2 is an exploded view of the secondary battery according to an embodiment of the present application shown in Fig. 1.
Fig. 3 is a schematic diagram of a battery module according to an embodiment of the present application.
Fig. 4 is a schematic diagram of a battery pack according to an embodiment of the present application.
Fig. 5 is an exploded view of the battery pack according to an embodiment of the present application as shown in Fig. 4.
Fig. 6 is a schematic diagram of an electrical device according to an embodiment of the present application using the secondary battery of the present application as a power source.
Fig. 7 is a scanning electron microscope (SEM) image of an ammonium manganese iron phosphate precursor prepared in Example 1.
Fig. 8 and Fig. 9 are scanning electron microscopy (SEM) images of the nano-scale lithium manganese iron phosphate positive electrode active material prepared in Example 1 at magnifications of 10000 times and 100000 times, respectively.
Fig. 10 is a first-cycle charge and discharge curve chart of a button battery prepared in Example 1.
Fig. 11 is a scanning electron microscope (SEM) image of an ammonium manganese iron phosphate precursor prepared in Example 2.
Fig. 12 is a scanning electron microscope (SEM) image of an ammonium manganese iron phosphate precursor prepared in Comparative Example 1.
Fig. 13 is a first-cycle charge and discharge curve chart of a button battery prepared in Comparative Example 1.
Fig. 14 is a scanning electron microscope (SEM) image of a manganese iron phosphate precursor prepared in Comparative Example 2.
Fig. 15 is a first-cycle charge and discharge curve chart of a button battery prepared in Comparative Example 2.

In the drawings, the accompanying drawings are not necessarily drawn to actual scale. Reference numerals are described as follows: 1 battery pack, 2 upper box body, 3 lower box body, 4 battery module, 5 secondary battery, 51 shell, 52 electrode assembly, 53 cover plate.

### DETAILED DESCRIPTION

Hereinafter, embodiments of the ammonium manganese iron phosphate precursor, the positive electrode active material, the method for the preparation thereof, the positive electrode plate, the secondary battery, and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps S1 and S2, indicating that the method may include steps S1 and S2 performed in sequence, or that the method may include steps S2 and S1 performed in sequence. For example, reference to the method further comprising step S3 indicates that step S3 may be added to the method in any order. As an example, the method may comprises steps S1, S2 and S3, or steps S1, S3 and S2, or steps S3, S1 and S2, and the like.

Unless stated otherwise, the transition phases "comprise", "comprising", "contain" and "containing" mentioned in the present application mean that it is drafted in an openended mode, or it may also mean a close-ended mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of ", and "more" mean two or more.

In the present application, the volume particle size Dv50 refers to a corresponding particle size when a cumulative volume distribution percentage of a material reaches 50%. The test basis may refer to GB/T 19077-2016. The test instrument may be a Malvern Master Size 3000 laser particle size analyzer.

In the present application, the expression " low-heating-temperature solid-state reaction" refers to a chemical reaction between solid-state compounds at room temperature or near room temperature (≤ 100°C).

Lithium manganese iron phosphate positive electrode active materials have become one of the most concerned positive electrode active materials due to their advantages of high capacity, good safety performance, abundant raw material sources, and the like. Currently, precursors of the lithium manganese iron phosphate positive electrode active materials mainly include oxalate precursors and phosphate precursors.

The process for preparing the lithium manganese iron phosphate positive electrode active materials by using the oxalate precursors is a typical solid-state sintering process. The sintering process involves decomposition of oxalate and release of a large amount of waste gas and toxic gas, which therefore faces enormous environmental pressure. Moreover, the decomposition of the oxalates further leads to higher surface energy of the prepared lithium manganese iron phosphate positive electrode active materials in the sintering process, which will increase the difficulty in processing of positive electrode plates and decrease quality product rate.

Liquid-phase co-precipitation is another common process for preparing positive electrode active material precursors. However, differences in solubility product constants of different metal ions lead to differences in precipitation rates of different metal ions in the co-precipitation process, making it impossible to achieve uniform co-precipitation of metal ions and accurately control the composition of a precursor according to the addition proportion of metal ions. Meanwhile, various additives such as a pH regulator, a complexing agent and a precipitant are usually added in the co-precipitation reaction process to promote the expected co-precipitation reaction process, which will generate a large amount of waste gas and waste liquid to increase environmental pressure. Moreover, reaction conditions of the co-precipitation reaction process are relatively complex, and are often combined with specific equipment for process design, so that the large-scale production process is confronted with an amplification effect, which would cause predetermined specifications of the pilot experiment not to be achieved during amplified production.

The inventors of the present application were surprised to discover in research that an ammonium manganese iron phosphate precursor is previously prepared by a low-heating-temperature solid-state reaction and then prepared into a lithium manganese iron phosphate positive electrode active material by a solid-state sintering process, which can simplify the preparation process, reduce costs, increase yield, reduce post-treatment process difficulties, environmental pressure and amplified production difficulties, and enables the obtained ammonium manganese iron phosphate precursor and lithium manganese iron phosphate positive electrode active material to have the characteristics of regular morphology, small particle size, narrow particle size distribution, uniform element distribution, high purity, easy and accurate control on composition, and high batch stability and consistency.

### Preparation method for an ammonium manganese iron phosphate precursor

Specifically, a first aspect of embodiments of the present application provides a method for preparing an ammonium manganese iron phosphate precursor, including the following steps: mixing and grinding metal source powder and phosphorus source powder to enable a low-heating-temperature solid-state reaction of each component, and then washing and drying the obtained product to obtain the ammonium manganese iron phosphate precursor, wherein the metal source includes an iron source, a manganese source and an optional source of a doping element M, M represents doping elements at manganese and iron sites, and the phosphorus source includes triammonium phosphate.

The preparation method for an ammonium manganese iron phosphate precursor provided by the present application is simple, where only the metal source powder and the phosphorus source powder are mixed and ground at room temperature or near room temperature (≤ 100°C) to enable a full chemical reaction of the solid-phase raw material components in a short time, and the ammonium manganese iron phosphate precursor is synthesized via a one-step method. In the process of mixing and grinding the metal source powder and the phosphorus source powder, the reaction system changes first from solid powder to slurry (namely, from a dry state to a wet state), and then from slurry to solid powder, so there is no sense of particles in the grinding process, and the obtained ammonium manganese iron phosphate precursor particles are fine and have a nano-scale size.

The method for preparing an ammonium manganese iron phosphate precursor provided by the present application meets the requirements of industrial scale production and is convenient for amplified production. Therefore, the preparation method can effectively avoid problems of amplification effect and difficult mass production during the liquid-phase co-precipitation reaction.

Compared with the liquid-phase co-precipitation method, the method for preparing an ammonium manganese iron phosphate precursor provided by the present application can achieve a more complete reaction, higher yield, and no side reactions or solvent residues in the reaction process, and therefore can improve the purity of the obtained ammonium manganese iron phosphate precursor. Meanwhile, various additives (such as a pH regulator, a complexing agent, and a precipitant) are not required to be added in the reaction process, thereby avoiding the generation of a large amount of waste gas and waste liquid in the liquid-phase co-precipitation reaction process, and further making the post-treatment process simpler, green, environment-friendly, and energy-saving.

Therefore, the method for preparing an ammonium manganese iron phosphate precursor provided by the present application is simple, low-cost, high in yield, low in post-treatment process difficulties, environment-friendly, energy-saving, and prone to amplified production.

Unlike the liquid-phase co-precipitation method, a process of low-heating-temperature solid-state reaction is used in the present application to prepare an ammonium manganese iron phosphate precursor, wherein 100% (or nearly 100%) of manganese ions and iron ions can participate in the reaction with no need of addition of various additives (such as a pH regulator, a complexing agent, and a precipitant). As a result, the composition of the obtained ammonium manganese iron phosphate precursor can be accurately controlled, the batch stability and consistency are higher, and a large quantity of impurities in the precursor due to the fact that some manganese ions and iron ions exist in a form of solution in the reaction system during the liquid co-precipitation reaction are avoided.

The ammonium manganese iron phosphate precursor obtained through the low-heating-temperature solid-state reaction provided by the present application has regular morphology, small particle size, narrow particle size distribution, and adjustable particle size. For example, the particle size is nano-scale and can be adjusted within a nano-scale range. Meanwhile, the obtained ammonium manganese iron phosphate precursor has uniform element distribution, high purity, and few impurities.

Therefore, the ammonium manganese iron phosphate precursor obtained by the preparation method provided in the present application has the characteristics of regular morphology, small particle size, narrow particle size distribution, uniform element distribution, high purity, easy and accurate control on composition, and high batch stability and consistency.

In some embodiments, mixing and grinding time may be from 0.25 h to 6 h, such as 0.5 h, 1 h, 2 h, 3 h, 4 h, 5 h, 6 h, or in a range consisting of any two of the above values. This helps to promote the complete low-heating-temperature solid-state reaction and can also adjust the particle size of the obtained ammonium manganese iron phosphate precursor, thereby obtaining the nano-scale ammonium manganese iron phosphate precursor. Optionally, the mixing and grinding time may be from 0.5 h to 6 h.

In some embodiments, the mixing and grinding (namely, low-heating-temperature solid-state reaction) may proceed at 20°C-100°C, optionally at a room temperature of 20°C-30°C, which can reduce energy consumption and facilitate amplified production.

In some embodiments, the mixing and grinding may proceed in a suitable grinding manner known in the art, for example, the mixing and grinding may be carried out in a mortar, a ball milling tank, or a ball mill. Optionally, a grinding speed in the mortar is 100 r/min. Optionally, a ball milling speed is from 300 r/min-800 r/min.

In some embodiments, a molar ratio of the metal source powder to the phosphorus source powder may be 1: (1-3). By adjusting the molar ratio of the metal source powder to the phosphorus source powder, conversion efficiency of metal ions can be improved, thereby reducing difficulties in waste liquid treatment in a post-treatment process and reducing environmental pollution. Moreover, the purity of the obtained ammonium manganese iron phosphate precursor can also be improved, and the content of impurities can be reduced.

In some embodiments, after the mixing and grinding, a step of standing may also be included. The standing helps to promote the completion of the low-heating-temperature solid-state reaction and the full crystallization of the generated ammonium manganese iron phosphate precursor. Optionally, standing time may be from 0.5 h to 12 h. For example, the standing time may be 1 h, 2 h, 3 h, 4 h, 5 h, 6 h, 7 h, 8 h, 9 h, 10 h, 11 h, 12 h, or in a range of any of the above values. Optionally, the standing time is from 2 h to 5 h.

In some embodiments, a sum of the mixing and grinding time and the standing time may be greater than or equal to 1.5 h, and optionally greater than or equal to 2.5 h. This helps to promote the complete low-heating-temperature solid-state reaction, and can enable the obtained ammonium manganese iron phosphate precursor to have higher crystallinity and purity, thereby improving the electrochemical performance of a subsequently prepared lithium manganese iron phosphate positive electrode active material.

In some embodiments, a surfactant may be further added to mix and grind with the metal source powder and the phosphorus source powder, thereby adjusting the morphology and particle size of the obtained ammonium manganese iron phosphate precursor. Optionally, the surfactant includes polyethylene glycol. Optionally, the polyethylene glycol has a molecular weight of ≤ 1000, and may include, for example, one or more of polyethylene glycol 200, polyethylene glycol 300, polyethylene glycol 400, polyethylene glycol 600, polyethylene glycol 800, and polyethylene glycol 1000.

In some embodiments, an addition amount of the surfactant may be 15 wt% or less, optionally 10 wt% or less, and more optionally 5 wt% or less, based on a total weight of the metal source powder and the phosphorus source powder. When the addition amount of the surfactant is within an appropriate range, the morphology and particle size of the obtained ammonium manganese iron phosphate precursor can be adjusted. When the addition amount of the surfactant is too high, the reaction system is in a liquid phase reaction state instead of a solid phase reaction state, which will lead to severe aggregation and no specific morphology of the obtained ammonium manganese iron phosphate precursor particles, thereby affecting the electrochemical performance of the subsequently prepared lithium manganese iron phosphate positive electrode active material and secondary battery.

In some embodiments, before mixing and grinding metal source powder and phosphorus source powder to enable a low-heating-temperature solid-state reaction of each component, the preparation method may further include the following step: grinding the metal source powder and/or the phosphorus source powder separately to refine the reaction materials, thereby promoting the complete low-heating-temperature solid-state reaction and obtaining the ammonium manganese iron phosphate precursor with a controllable particle size. Optionally, time for grinding the metal source powder is from 0.25 h to 1.5 h. Optionally, time for grinding the phosphorus source powder is from 0.25 h to 1.5 h.

In some embodiments, the washing may include water washing and/or alcohol washing, and optionally, the washing includes both water washing and alcohol washing. The washing can remove impurities and excess triammonium phosphate from the generated ammonium manganese iron phosphate precursor.

In some embodiments, optionally, the alcohol washing uses ethanol as a solvent.

In some embodiments, the water washing is carried out 2-4 times. In some embodiments, the alcohol washing is carried out 2-4 times.

In some embodiments, the drying may be vacuum drying.

In some embodiments, a drying temperature may be 100°C or less, and optionally from 60°C to 100°C.

In some embodiments, drying time may be from 8 h to 20 h, thereby obtaining an anhydrous ammonium manganese iron phosphate precursor, which helps to accurately adjust the proportion of each element in the subsequently prepared lithium manganese iron phosphate positive electrode active material.

In the preparation method provided by the present application, addition amounts of an iron source and a manganese source conform to a stoichiometric ratio of the ammonium manganese iron phosphate precursor, and an addition amount of the source of the doping element M depends on a target doping amount.

In some embodiments, the iron source may be a divalent iron salt, and optionally includes one or more selected from ferrous chloride, ferrous nitrate, ferrous sulfate, and ferrous acetate.

In some embodiments, the manganese source may be a divalent manganese salt, and optionally includes one or more selected from manganous chloride, manganous nitrate, manganous sulfate, and manganous acetate.

In some embodiments, the source of the doping element M is a divalent salt of the doping element M, and optionally includes one or more selected from a hydrochloride, a nitrate, a sulfate, and an acetate of the doping element M.

M represents doping elements at manganese and iron sites. In some embodiments, optionally, M may include one or more selected from Ni, Co, Mg, Zn, Ca, Ti, V and Cr.

In the preparation method of the present application, unless otherwise specified, each raw material may be directly purchased, and each raw material may or may not carry crystalline water.

### Ammonium manganese iron phosphate precursor

A second aspect of the embodiments of the present application provides an ammonium manganese iron phosphate precursor prepared by the preparation method according to the first aspect of the present application.

The ammonium manganese iron phosphate precursor has a chemical formula NH₄FeₓMn_{y}M_{1-x-y}PO₄, wherein 0 < x < 1, 0 < y < 1, 0 ≤ 1-x-y < 1, M represents doping elements at manganese and iron sites and optionally includes one or more selected from Ni, Co, Mg, Zn, Ca, Ti, V and Cr, and the ammonium manganese iron phosphate precursor is electrically neutral.

The ammonium manganese iron phosphate precursor provided by the present application has the characteristics of regular morphology, small particle size, narrow particle size distribution, uniform element distribution, high purity, easy and accurate control on composition, and high batch stability and consistency.

In some embodiments, the ammonium manganese iron phosphate precursor has a nano-sheet morphology. Optionally, the ammonium manganese iron phosphate precursor has an average length of 50 nm-800 nm. Optionally, the ammonium manganese iron phosphate precursor has an average thickness of ≤ 100 nm.

In some embodiments, particles of the ammonium manganese iron phosphate precursor are in a single crystal form.

### Method for preparing a lithium manganese iron phosphate positive electrode active material

A third aspect of the present application provides a method for preparing a lithium manganese iron phosphate positive electrode active material, including the following steps: S 1, mixing and grinding the ammonium manganese iron phosphate precursor prepared by the preparation method according to the first aspect of the present application or the ammonium manganese iron phosphate precursor according to the second aspect of the present application with a lithium source, an optional source of a doping element N, an optional source of a doping element Q, and an optional source of a doping element in a predetermined ratio, and then performing spray drying granulation, wherein N represents a doping element at a lithium site, Q represents a doping element at a phosphorus site, and R represents a doping element at an oxygen site; and S2, sintering the powder obtained in S1 to obtain the lithium manganese iron phosphate positive electrode active material.

Compared with oxalate precursors, the present application uses nano-scale ammonium manganese iron phosphate as a precursor in the preparation of the lithium manganese iron phosphate positive electrode active material, which can avoid aggregation of precursor particles to affect electrochemical performance, also avoid generation of a large amount of waste gas and toxic gas by oxalate decomposition, and further avoid an impact of the oxalate decomposition on surface energy of the lithium manganese iron phosphate positive electrode active material, thereby reducing difficulties in processing positive electrode plates and increasing quality product rate of the positive electrode plates.

The present application uses the nano-scale ammonium manganese iron phosphate as the precursor in the preparation of the lithium manganese iron phosphate positive electrode active material, which can further obtain the lithium manganese iron phosphate positive electrode active material with lithium, manganese, iron, and doping elements uniformly mixed at a molecular level, thereby avoiding problems of large raw material particles, uneven distribution of elements, high energy consumption for ball milling, and the like in a conventional high-temperature solid-state sintering method.

The method for preparing a lithium manganese iron phosphate positive electrode active material, provided by the present application, can obtain the lithium manganese iron phosphate positive electrode active material with regular morphology, small particle size, narrow particle size distribution, uniform element distribution, high purity, easy and accurate control on composition, and high batch stability and consistency, and the obtained lithium manganese iron phosphate positive electrode active material can further have excellent electrochemical performance, such as high specific capacity and high initial coulomb efficiency.

In some embodiments, the lithium source may be a lithium-containing compound known in the art for preparing lithium manganese iron phosphate positive electrode active materials, for example, the lithium source includes Li₂CO₃, LiOH, or a combination thereof.

N represents the doping element at the lithium site. In some embodiments, N includes one or more selected from Zn, Al, Na, K, Mg, Nb, Mo, and W. In some embodiments, the source of the doping element N includes one or more selected from a hydrochloride, a nitrate, a sulfate, and an acetate of the doping element N.

Q represents the doping element at the phosphorus site. In some embodiments, Q includes one or more selected from B, S, Si, and N. In some embodiments, the source of the doping element Q includes one or more selected from a sulfate, a borate, a nitrate, and a silicate of the doping element Q.

R represents the doping element at the oxygen site. In some embodiments, R includes one or more selected from S, F, Cl, and Br. In some embodiments, the source of the doping element R includes one or more selected from a elemental substance and an ammonium salt of the doping element R.

By selecting the sources of the foregoing doping elements, the uniformity of distribution of the doping elements can be improved, thereby improving the electrochemical performance of the lithium manganese iron phosphate positive electrode active material.

In some embodiments, in S1, a carbon source is further added for mixing and grinding to obtain a carbon-coated lithium manganese iron phosphate positive electrode active material. The carbon source includes one or more of organic carbon sources and inorganic carbon sources, and optionally includes one or more of glucose, sucrose, starch, fructose, polyvinyl alcohol, polyethylene glycol, and citric acid.

In some embodiments, in S1, the grinding may be carried out in a suitable grinding manner known in the art, for example, the grinding may be carried out in a ball milling tank or ball mill. Optionally, a ball milling speed is from 300 r/min to 800 r/min. Optionally, grinding time is from 1 h to 6 h.

In some embodiments, in S1, a small amount of solvent, such as ethanol and/or water, may further be added in the grinding process.

In some embodiments, in S1, a spray drying temperature may be the conventional temperature for spray drying in the art. Optionally, the spray drying temperature is from 200°C to 250°C.

In some embodiments, in S2, the sintering may be carried out in a muffle furnace.

In some embodiments, in S2, the sintering may be step-by-step sintering. Optionally, the sintering includes the following steps: pre-sintering the powder obtained in S1 at a low temperature of 3 50°C-500°C in an air atmosphere or a protective gas atmosphere, and then sintering the powder at a high temperature of 650°C-750°C in the protective gas atmosphere to obtain the lithium manganese iron phosphate positive electrode active material.

In some embodiments, time for the low-temperature pre-sintering may be from 1 h to 6 h.

In some embodiments, time for the high-temperature sintering may be from 3 h to 24 h.

In some embodiments, the protective gas may be nitrogen, inert gas, or a combination thereof.

In some embodiments, grinding and spray drying granulation steps may be further included after the low-temperature pre-sintering and before the high-temperature sintering. The grinding may be carried out in a suitable grinding manner known in the art, for example, the grinding may be carried out in a ball milling tank or ball mill. Optionally, a ball milling speed is from 300 r/min-800 r/min. Optionally, grinding time is from 1 h to 6 h. A small amount of solvent, such as ethanol and/or water, may further be added in the grinding process. A spray drying temperature may be the conventional temperature for spray drying in the art. Optionally, the spray drying temperature is from 200°C to 250°C.

In some embodiments, the method for preparing a lithium manganese iron phosphate positive electrode active material may further include the following step: crushing the obtained lithium manganese iron phosphate positive electrode active material to a desired particle size. Optionally, the crushing is air crushing.

In some embodiments, the method for preparing a lithium manganese iron phosphate positive electrode active material includes the following steps: mixing and grinding metal source powder and phosphorus source powder to enable a low-heating-temperature solid-state reaction of each component, and then washing and drying the obtained product to obtain an ammonium manganese iron phosphate precursor, wherein the metal source includes an iron source, a manganese source and an optional source of a doping element M, M represents a doping element at manganese and iron sites and optionally includes one or more selected from Ni, Co, Mg, Zn, Ca, Ti, V and Cr, and the phosphorus source includes triammonium phosphate; mixing and grinding the obtained ammonium manganese iron phosphate precursor with a lithium source, an optional source of a doping element N, an optional source of a doping element Q and an optional source of a doping element R in a predetermined ratio, and then performing spray drying granulation to obtain powder, where N represents a doping element at a lithium site and optionally includes one or more selected from Zn, Al, Na, K, Mg, Nb, Mo and W, Q represents a doping element at a phosphorus site and optionally includes one or more selected from B, S, Si and N, and R represents a doping element at an oxygen site and optionally includes one or more selected from S, F, Cl and Br; and pre-sintering the obtained powder at a low temperature of 350°C-500°C in an air atmosphere or a protective gas atmosphere, then performing grinding and spray drying granulation, and sintering the powder at a high temperature of 650°C-750°C in the protective gas atmosphere to obtain the lithium manganese iron phosphate positive electrode active material.

In the preparation method of the present application, an addition amount of each source of the doping elements M, N, Q, and R depends on a target doping amount; and an addition amount of the lithium source conforms to a stoichiometric ratio of the lithium manganese iron phosphate positive electrode active material. In some embodiments, the addition amount of the lithium source may be slightly excessive, such as 100% -110% of a theoretical mass of the lithium source. The theoretical mass of the lithium source refers to a mass of the lithium source calculated based on the stoichiometric ratio of the lithium manganese iron phosphate positive electrode active material.

In the preparation method of the present application, unless otherwise specified, all raw materials may be directly purchased.

### Lithium manganese iron phosphate positive electrode active material

A fourth aspect of the embodiments of the present application provides a lithium manganese iron phosphate positive electrode active material, which is prepared by the preparation method according to the third aspect of the present application. The lithium manganese iron phosphate positive electrode active material has a chemical formula LiₐN_{b}FeₓMn_{y}M_{1-x-y}P₁₋ₘQₘO₄₋ₙRₙ, wherein M represents doping elements at manganese and iron sites, N represents a doping element at a lithium site, Q represents a doping element at a phosphorus site, R represents a doping element at an oxygen site, 0.9 ≤ a ≤ 1.1, 0 ≤ b ≤ 0.1, 0 < x < 1, 0 < y < 1, 0 ≤ 1-x-y < 1, 0 ≤ m < 1, 0 ≤ n < 4, and the lithium manganese iron phosphate positive electrode active material is electrically neutral.

The lithium manganese iron phosphate positive electrode active material provided by the present application has the characteristics of regular morphology, small particle size, narrow particle size distribution, uniform element distribution, high purity, easy and accurate control on composition, and high batch stability and consistency. The lithium manganese iron phosphate positive electrode active material provided by the present application further has excellent electrochemical performance, such as high specific capacity and high initial coulomb efficiency.

In some embodiments, the lithium manganese iron phosphate positive electrode active material has a spherical or quasi spherical morphology formed by aggregation of primary particles.

In some embodiments, a volume particle size Dv50 of the lithium manganese iron phosphate positive electrode active material is from 6 µm to 10 µm.

In some embodiments, a surface of the lithium manganese iron phosphate positive electrode active material is further coated with carbon, which helps to improve electronic conductivity of the lithium manganese iron phosphate positive electrode active material.

M represents the doping elements at the manganese and iron sites, and in some embodiments, optionally, M includes one or more selected from Ni, Co, Mg, Zn, Ca, Ti, V and Cr. N represents the doping element at the lithium site, and in some embodiments, optionally, N includes one or more selected from Zn, Al, Na, K, Mg, Nb, Mo and W. Q represents the doping element at the phosphorus site, and in some embodiments, optionally, Q includes one or more selected from B, S, Si and N. R represents the doping element at the oxygen site, and in some embodiments, optionally, R includes one or more selected from S, F, Cl and Br.

In some embodiments, optionally, 0.001 ≤ b ≤ 0.1. In some embodiments, optionally, 0.20 ≤ x ≤ 0.50. In some embodiments, optionally, 0.50 ≤ y ≤ 0.80. In some embodiments, optionally, 0.001 ≤ 1-x-y ≤ 0.1. In some embodiments, optionally, 0.001 ≤ m ≤ 0.1. In some embodiments, optionally, 0.001 ≤ n ≤ 0.1.

Selecting the doping elements within the above doping range enables the lithium manganese iron phosphate positive electrode active material to have higher structural stability and better electrochemical performance.

### Secondary battery

A fifth aspect of the embodiments of the present application provides a secondary battery. The secondary battery, also known as a rechargeable battery or a storage battery, refers to a battery that can activate an active material by means of charging after discharge and continue to be used. Generally, the secondary battery includes an electrode assembly and an electrolyte, where the electrode assembly includes a positive electrode plate, a negative electrode plate, and a separator. The separator is disposed between the positive electrode plate and the negative electrode plate, mainly prevents a short circuit between a positive electrode and a negative electrode, and can enable active ions to pass. The electrolyte plays a role in conducting the active ions between the positive electrode plate and the negative electrode plate.

### [Positive electrode plate]

The positive electrode plate of the present application includes a positive electrode current collector and a positive electrode film layer disposed on at least one surface of the positive electrode current collector, wherein the positive electrode film layer includes the lithium manganese iron phosphate positive electrode active material obtained by the preparation method according the third aspect of of the present application or the lithium manganese iron phosphate positive electrode active material according the fourth aspect of the present application. The positive electrode current collector has two surfaces opposite in its thickness direction, and the positive electrode film layer is disposed on either or both of the two opposite surfaces of the positive electrode current collector.

In some embodiments, a content of the lithium manganese iron phosphate positive electrode active material in the positive electrode film layer is 50 wt% or more, optionally from 85 wt% to 99 wt%, and more optionally from 90 wt% to 99 wt%, based on a total weight of the positive electrode film layer.

The positive electrode film layer does not exclude other components besides the aforementioned lithium manganese iron phosphate positive electrode active material. For example, the positive electrode film layer may further include other positive electrode active materials, and optionally, the other positive electrode active materials may include one or more of lithium transition metal oxides and modified compounds thereof. As an example, the other positive electrode active materials may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof.

In some embodiments, the positive electrode film layer may further optionally include a positive electrode conductive agent. The present application does not specially limit a type of the positive electrode conductive agent. As an example, the positive electrode conductive agent includes one or more of superconducting carbon, conductive graphite, acetylene black, carbon black, Ketjen black, carbon dots, carbon nanotubes, graphene, and carbon nanofibers.

In some embodiments, the positive electrode film layer may further optionally include a positive electrode binder. The present application does not specially limit a type of the positive electrode binder. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode current collector may be a metal foil or a composite current collector. An aluminum foil may be used as an example of the metal foil. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

The positive electrode film layer is usually formed by applying the positive electrode current collector with a positive electrode slurry, drying, and cold pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited to this.

### [Negative electrode plate]

In some embodiments, the negative electrode plate includes a negative electrode current collector and a negative electrode film layer disposed on at least one surface of the negative electrode current collector and including a negative electrode active material. For example, the negative electrode current collector has two surfaces opposite in its thickness direction, and the negative electrode film layer is disposed on either or both of the two opposite surfaces of the negative electrode current collector.

The negative electrode active material may be a negative electrode active material commonly known in the art for secondary batteries. As an example, the negative electrode active material includes but is not limited to one or more of natural graphite, artificial graphite, soft carbon, hard carbon, a silicon-based material, a tin-based material, and lithium titanate. The silicon-based material may include one or more of elemental silicon, a silicon oxide, a silicon-carbon complex, a silicon-nitrogen complex, and a silicon alloy material. The tin-based material may include one or more of elemental tin, a tin oxide, and a tin alloy material. The present application is not limited to these materials, and may also use other conventional known materials that may be used as negative electrode active materials of secondary batteries. One type of these negative electrode active materials may be used alone, or two or more types may be used in combination.

In some embodiments, the negative electrode film layer may further optionally include a negative electrode conductive agent. The present application does not specially limit a type of the negative electrode conductive agent. As an example, the negative electrode conductive agent may include one or more of superconducting carbon, conductive graphite, acetylene black, carbon black, Ketjen black, carbon dots, carbon nanotubes, graphene, and carbon nanofibers.

In some embodiments, the negative electrode film layer may further optionally include a negative electrode binder. The present application does not specially limit a type of the negative electrode binder. As an example, the negative electrode binder may include one or more of styrene butadiene rubber (SBR), water-soluble unsaturated resin SR-1B, aqueous acrylic resin (such as polyacrylic acid PAA, polymethyl methacrylate PMAA, polyacrylic acid sodium PAAS), polyacrylamide (PAM), polyvinyl alcohol (PVA), sodium alginate (SA), and carboxymethyl chitosan (CMCS).

In some embodiments, the negative electrode film layer may further optionally include other auxiliaries. As an example, the other auxiliaries may include a thickener, such as carboxymethyl cellulose sodium (CMC) or a PTC thermistor material.

In some embodiments, the negative electrode current collector may be a metal foil or a composite current collector. A copper foil may be used as an example of the metal foil. The composite current collector may include a polymer material base layer and a metal material layer formed on at least one surface of the polymer material base layer. As an example, the metal material may include one or more of copper, copper alloy, nickel, nickel alloy, titanium, titanium alloy, silver, and silver alloy. As an example, the polymer material base layer may include one or more of polypropylene (PP), polyethylene terephthalate (PET), polybutylene terephthalate (PBT), polystyrene (PS), and polyethylene (PE).

The negative electrode film layer is usually formed by applying the negative electrode current collector with a negative electrode slurry, drying, and cold pressing. The negative electrode slurry is usually formed by dispersing the negative electrode active material, the optional conductive agent, the optional binder, and other optional auxiliaries in a solvent and stirring uniformly. The solvent may be N-methylpyrrolidone (NMP) or deionized water, but is not limited to this.

The negative electrode plate does not exclude other additional functional layers besides the negative electrode film layer. For example, in some embodiments, the negative electrode plate described in the present application further includes a conductive primer (for example, being composed of a conductive agent and a binder) sandwiched between the negative electrode current collector and the negative electrode film layer and disposed on the surface of the negative electrode current collector. In other embodiments, the negative electrode plate described in the present application further includes a protective layer covering the surface of the negative electrode film layer.

### [Electrolyte]

The present application does not specifically limit a type of the electrolyte, which may be selected according to actual needs. For example, the electrolyte may be selected from one or more of a solid electrolyte and a liquid electrolyte (namely, an electrolytic solution).

In some embodiments, the electrolyte is an electrolytic solution, which includes an electrolyte salt and a solvent.

The type of the electrolyte salt is not specifically limited and may be selected according to actual needs. In some embodiments, as an example, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bis(trifluoromethane sulfonimide) (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium difluorodioxalate phosphate (LiDFOP) and lithium tetrafluorooxalate phosphate (LiTFOP).

The type of the solvent is not specifically limited and may be selected according to actual needs. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS) and diethyl sulfone (ESE).

In some embodiments, the electrolytic solution may further optionally include additives. For example, the additives may include a negative electrode film-forming additive, a positive electrode film-forming additive, and additives that can improve some performances of batteries, such as an additive that improves overcharge performance of batteries, an additive that improves high-temperature performance of batteries, and an additive that improves low-temperature performance of batteries.

### [Separator]

The secondary battery using the electrolytic solution and some secondary batteries using solid electrolytes further include a separator. The separator is disposed between the positive electrode plate and the negative electrode plate, mainly to prevent a short circuit between a positive electrode and a negative electrode while allowing active ions to pass through. The present application does not specially limit a type of the separator. The separator may be any known porous separator with good chemical and mechanical stability.

In some embodiments, a material of the separator may include one or more of glass fibers, non-woven fabric, polyethylene, polypropylene, and polyvinylidene fluoride. The separator may be a single-layer film or a multi-layer composite film. When the separator is a multi-layer composite film, materials of respective layers may be the same or different.

In some embodiments, the positive electrode plate, the separator, and the negative electrode plate may be made into an electrode assembly through a winding process and/or laminating process.

In some embodiments, the secondary battery may include an outer package. The outer package may be used for packaging the foregoing electrode assembly and electrolyte.

In some embodiments, the outer package of the secondary battery may be a hard shell, such as a hard plastic shell, an aluminum shell, or a steel shell. The outer package of the secondary battery may alternatively be a soft bag, such as a pocket type soft bag. A material of the soft bag may be plastic, such as one or more of polypropylene (PP), polybutylene terephthalate (PBT), and polybutylene succinate (PBS).

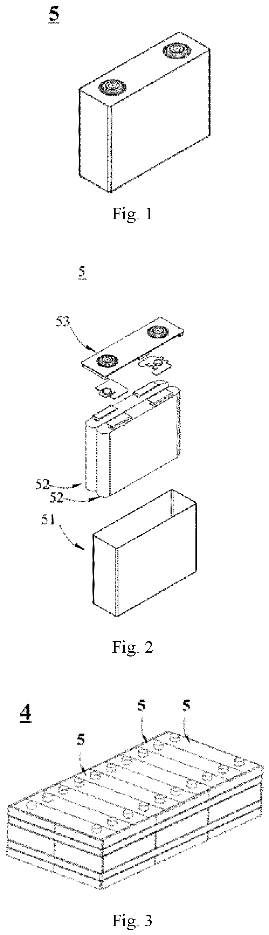

The present application does not have particular limitation to a shape of the secondary battery. The secondary battery may be cylindrical, square, or in other arbitrary shape. Fig. 1 shows a secondary battery 5 with a cuboid structure as an example.

In some embodiments, as shown in Fig. 2, the outer package may include a shell 51 and a cover plate 53. The shell 51 may include a bottom plate and side plates connected to the bottom plate, and the bottom plate and the side plates enclose an accommodating cavity. The shell 51 has an opening in communication with the accommodating cavity, and the cover plate 53 is closed to the opening to seal the accommodating cavity. The positive electrode plate, the negative electrode plate, and the separator may be wound and/or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to actual needs.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, and the secondary battery is obtained after vacuum packaging, standing, formation, shaping, and other processes.

In some embodiments of the present application, the secondary battery according to the present application may be assembled into a battery module. The battery module may include a plurality of secondary batteries, and a specific quantity may be adjusted according to the application and capacity of the battery module.

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and a quantity of the battery module included in the battery pack may be adjusted according to the application and capacity of the battery pack.

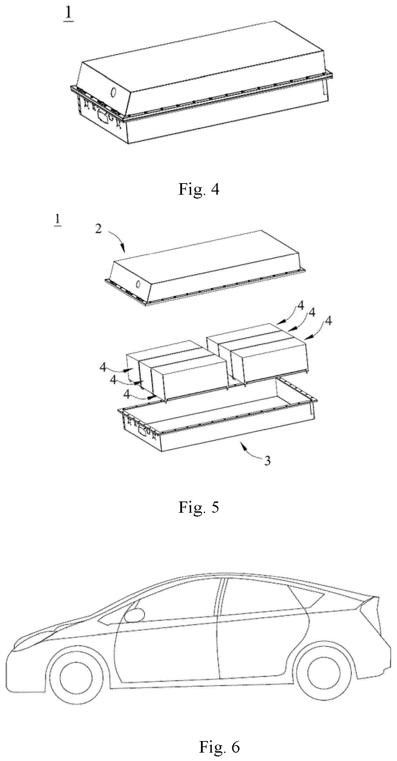

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 covers the lower box body 3 to form a closed space for accommodating the battery modules 4. The plurality of battery modules 4 may be arranged in the battery box in any manner.

An embodiment of the present application further provides an electrical device. The electrical device includes one or more of the secondary battery, the battery module, or the battery pack of the present application. The secondary battery, the battery module, or the battery pack may be used as a power source of the electrical device, or as an energy storage unit of the electrical device. The electrical device may be, but is not limited to, a mobile device (such as a mobile phone or a notebook computer), an electric vehicle (such as a full electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

Fig. 6 is a schematic diagram of an electrical device as an example. The electrical device is a full electric vehicle, a hybrid electric vehicle, a plug-in hybrid electric vehicle, or the like. In order to meet the requirements of the electrical device for high power and high energy density, the battery pack or the battery module may be used.

As another example, the electrical device may be a mobile phone, a tablet computer, a notebook computer, or the like. The electrical device is generally required to be thin and light, so the secondary battery may be used as a power source.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages and ratios described in the following examples are based on weight, all reagents used in the examples are commercially available or synthesized according to conventional methods and can be directly used without further treatment, and all instruments used in the examples are commercially available.

### Example 1

### (1) Preparation of an ammonium manganese iron phosphate precursor

In a room temperature environment, FeSO₄·7H₂O (19.8 mmol), MnSO₄·H₂O (29.7 mmol) and MgSO₄·7H₂O (0.5 mmol) were added to a mortar and ground for 0.5 h to refine particles; then (NH₄)₃PO₄ (60 mmol) and polyethylene glycol 600 (2 ml) were added to the mortar and continuously mixed and ground for 0.5 h, followed by standing for 2 h to ensure a complete reaction; and the obtained powder was washed with water and ethanol each 3 times separately and then dried in an 80°C vacuum drying oven for 12 h to obtain pre-doped ammonium manganese iron phosphate NH₄Mn_{0.594}Fe_{0.396}Mg_{0.01}PO₄, with a yield up to 99.1%.

### (2) Preparation of a lithium manganese iron phosphate positive electrode active material

The pre-doped ammonium manganese iron phosphate NH₄Mn_{0.594}Fe_{0.396}Mg_{0.01}PO₄ (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiMn_{0.594}Fe_{0.396}Mg_{0.01}PO₄.

### Example 2

### (1) Preparation of an ammonium manganese iron phosphate precursor

In a room temperature environment, FeSO₄·7H₂O (19.8 mmol), MnSO₄·H₂O (29.7 mmol) and MgSO₄·7H₂O (0.5 mmol) were added to a mortar and ground for 0.5 h to refine particles; then (NH₄)₃PO₄ (60 mmol) and polyethylene glycol 600 (5 ml) were added to the mortar and continuously mixed and ground for 0.5 h, followed by standing for 2 h to ensure a complete reaction; and the obtained powder was washed with water and ethanol 3 times separately and then dried in an 80°C vacuum drying oven for 12 h to obtain pre-doped ammonium manganese iron phosphate NH₄Mn_{0.594}Fe_{0.396}Mg_{0.01}PO₄, with a yield up to 98.6%.

### (2) Preparation of a lithium manganese iron phosphate positive electrode active material

The pre-doped ammonium manganese iron phosphate NH₄Mn_{0.594}Fe_{0.396}Mg_{0.01}PO₄ (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiMn_{0.594}Fe_{0.396}Mg_{0.01}PO₄.

### Example 3

### (1) Preparation of an ammonium manganese iron phosphate precursor

In a room temperature environment, FeSO₄·7H₂O (9.9 mmol), MnSO₄·H₂O (39.6 mmol) and MgSO₄·7H₂O (0.5 mmol) were added to a mortar and ground for 0.5 h to refine particles; then (NH₄)₃PO₄ (60 mmol) and polyethylene glycol 600 (2 ml) were added to the mortar and continuously mixed and ground for 0.5 h, followed by standing for 2 h to ensure a complete reaction; and the obtained powder was washed with water and ethanol 3 times separately and then dried in an 80°C vacuum drying oven for 12 h to obtain pre-doped ammonium manganese iron phosphate NH₄Mn_{0.792}Fe_{0.198}Mg_{0.01}PO₄, with a yield up to 99.2%.

### (2) Preparation of a lithium manganese iron phosphate positive electrode active material

The pre-doped ammonium manganese iron phosphate NH₄Mn_{0.792}Fe_{0.198}Mg_{0.01}PO₄ (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiMn_{0.792}Fe_{0.198}Mg_{0.01}PO₄.

### Example 4

### (1) Preparation of an ammonium manganese iron phosphate precursor

In a room temperature environment, FeSO₄·7H₂O (14.85 mmol), MnSO₄·H₂O (34.65 mmol) and MgSO₄·7H₂O (0.5 mmol) were added to a mortar and ground for 0.5 h to refine particles; then (NH₄)₃PO₄ (60 mmol) and polyethylene glycol 600 (2 ml) were added to the mortar and continuously mixed and ground for 0.5 h, followed by standing for 2 h to ensure a complete reaction; and the obtained powder was washed with water and ethanol 3 times separately and then dried in an 80°C vacuum drying oven for 12 h to obtain pre-doped ammonium manganese iron phosphate NH₄Mn_{0.693}Fe_{0.297}Mg_{0.01}PO₄, with a yield up to 99.5%.

### (2) Preparation of a lithium manganese iron phosphate positive electrode active material

The pre-doped ammonium manganese iron phosphate NH₄Mn_{0.693}Fe_{0.297}Mg_{0.01}PO₄ (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiMn_{0.693}Fe_{0.297}Mg_{0.01}PO₄.

### Example 5

### (1) Preparation of an ammonium manganese iron phosphate precursor

In a room temperature environment, FeSO₄·7H₂O (24.75 mmol), MnSO₄·H₂O (24.75 mmol) and MgSO₄·7H₂O (0.5 mmol) were added to a mortar and ground for 0.5 h to refine particles; then (NH₄)₃PO₄ (60 mmol) and polyethylene glycol 600 (2 ml) were added to the mortar and continuously mixed and ground for 0.5 h, followed by standing for 2 h to ensure a complete reaction; and the obtained powder was washed with water and ethanol 3 times separately and then dried in an 80°C vacuum drying oven for 12 h to obtain pre-doped ammonium manganese iron phosphate NH₄Fe_{0.495}Mn_{0.495}Mg_{0.01}PO₄, with a yield up to 99.6%.

### (2) Preparation of a lithium manganese iron phosphate positive electrode active material

The pre-doped ammonium manganese iron phosphate NH₄Fe_{0.495}Mn_{0.495}Mg_{0.01}PO₄ (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiFe_{0.495}Mn_{0.495}Mg_{0.01}PO₄.

### Example 6

### (1) Preparation of an ammonium manganese iron phosphate precursor

In a room temperature environment, FeSO₄·7H₂O (14.85 mmol), MnSO₄·H₂O (34.65 mmol) and MgSO₄·7H₂O (0.5 mmol) were added to a mortar and ground for 0.5 h to refine particles; then (NH₄)₃PO₄ (100 mmol) and polyethylene glycol 600 (1 ml) were added to the mortar and continuously mixed and ground for 0.5 h, followed by standing for 2 h to ensure a complete reaction; and the obtained powder was washed with water and ethanol 3 times separately and then dried in an 80°C vacuum drying oven for 12 h to obtain pre-doped ammonium manganese iron phosphate NH₄Mn_{0.693}Fe_{0.297}Mg_{0.01}PO₄, with a yield up to 99.4%.

### (2) Preparation of a lithium manganese iron phosphate positive electrode active material

The pre-doped ammonium manganese iron phosphate NH₄Mn_{0.693}Fe_{0.297}Mg_{0.01}PO₄ (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiMn_{0.693}Fe_{0.297}Mg_{0.01}PO₄.

### Comparative Example 1

### (1) Preparation of an ammonium manganese iron phosphate precursor

MnSO₄·H₂O, FeSO₄·7H₂O and MgSO₄·7H₂O were dissolved in pure water in a Mn: Fe: Mg molar ratio of 69.3:29.7:1 to prepare 2 L of first mixed solution with a concentration of 2 mol/L; phosphoric acid and ammonia water were mixed in a molar ratio of 1:3 and then added with pure water to obtain 4 L of second mixed solution with a phosphate ion concentration of 1 mol/L; and polyvinylidene fluoride (as a carbon source) and triammonium citrate (as a complexing agent) were added to 1 L of pure water to obtain a third mixed solution with a complexing agent concentration of 0.05 mol/L.

The third mixed solution as a reaction base solution was added to a reactor, the temperature was controlled at 60°C, the first mixed solution and the second mixed solution was added dropwise to the reactor at a stirring speed of 800 r/min, and a pH value of the control system was controlled to 6.0 ± 0.5 by adjusting the addition speed of the second mixed solution; and after the addition, the stirring was continued for 1 h to obtain a first slurry.

The first slurry was filtered, the filtrate was washed with pure water until the conductivity of the filtrate was ≤ 200 µs/cm, and a pre-doped ammonium manganese iron phosphate precursor NH₄Mn_{0.693}Fe_{0.297}Mg_{0.01}PO₄·H₂O/C was obtained, with a yield of only 83%.

### (2) Preparation of a lithium manganese iron phosphate positive electrode active material

The pre-doped ammonium manganese iron phosphate NH₄Mn_{0.693}Fe_{0.297}Mg_{0.01}PO₄·H₂O/C (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiMn_{0.693}Fe_{0.297}Mg_{0.01}PO₄.

### Comparative Example 2

### (1) Preparation of a manganese iron phosphate precursor

In a reactor, FeSO₄·7H₂O, MnSO₄·H₂O, cetyltrimethylammonium bromide (surfactant), and carbon nanotube slurry with a tube diameter of 7 nm-11 nm were mixed to obtain a first slurry, where the FeSO₄·7H₂O had a concentration of 0.025 mol/L, the MnSO₄·H₂O had a concentration of 0.1 mol/L, the cetyltrimethylammonium bromide accounted for 0.2% of a total weight of the first slurry, and the carbon nanotube slurry accounted for 0.2% of the total weight of the first slurry.

Hydrogen peroxide (oxidant) was mixed with 0.13 mol/L ammonium dihydrogen phosphate to obtain a second solution, the second solution was added to the reactor, heated to 85°C and subjected to ultrasonic vibration, and a seed crystal was obtained after 2 hours of reaction.

FeSO₄·7H₂O and MnSO₄·H₂O were mixed to prepare a third solution, where the FeSO₄·7H₂O had a concentration of 0.2 mol/L and the MnSO₄·H₂O had a concentration of 0.8 mol/L.

Hydrogen peroxide (oxidant) was mixed with 1.0 mol/L ammonium dihydrogen phosphate to obtain a fourth solution.

The seed crystal and the third solution were stirred uniformly in the reactor, then added with the fourth solution, heated to 85°C and subjected to ultrasonic vibration. After 2 hours of reaction, phosphoric acid with a mass concentration of 50% was added for transformation and crystallization for 2 hours, followed by filtration, washing, drying, and crushing, to obtain a manganese iron phosphate precursor, with a yield of only 86%.

### (2) Preparation of a lithium manganese iron phosphate positive electrode active material

The manganese iron phosphate precursor (50 mmol), Li₂CO₃ (25.3 mmol), and sucrose (7 mmol) were put into a ball milling tank, added with a small amount of ethanol and water as a solvent, and milled at a speed of 400 r/min for 2 h to obtain a slurry; the obtained slurry was transferred to a spray drying equipment for spray drying granulation to obtain powder, wherein the drying temperature was set at 210°C; the obtained powder was put into a muffle furnace and sintered in a nitrogen atmosphere at 400°C for 5 h; the obtained powder was added with water as a solvent, put into the ball milling tank, and milled at a speed of 600 r/min for 2 h to obtain a slurry; the obtained slurry was transferred to the spray drying equipment for spray drying granulation to obtain powder; and the obtained powder was put into the muffle furnace, sintered in the nitrogen atmosphere at 700°C for 10 h, then naturally cooled to room temperature, and crushed with air to obtain a final product, namely, a lithium manganese iron phosphate positive electrode active material LiFe_{0.2}Mn_{0.8}PO₄.

### Test section

### (1) Metal element content test

The content of each metal element in the ammonium manganese iron phosphate or manganese iron phosphate precursor prepared above was tested by using a Plasma 3000 inductively coupled plasma emission spectrometer and an ICP-OES method, and molar ratios were calculated. The test results were shown in Table 1.

### (2) Test on first cycle performance of a button battery

The prepared lithium manganese iron phosphate positive electrode active material, polyvinylidene fluoride (PVDF) as a binder, and acetylene black as a conductive agent were added in a weight ratio of 90:5:5 to N-methylpyrrolidone (NMP) and stirred in a drying room to obtain a slurry. An aluminum foil was applied with the slurry, dried, and cold-pressed to form a positive electrode plate.

A lithium plate as a negative electrode, a solution of 1 mol/L LiPF₆ in ethylene carbonate (EC), diethyl carbonate (DEC) and dimethyl carbonate (DMC) at a volume ratio of 1:1:1 as an electrolytic solution, and the prepared positive electrode plate were assembled in a button battery box to obtain a button battery.

The button battery was charged at a constant current rate of 0.1 C to 4.3 V in a constant temperature environment of 25°C and then charged at the constant voltage of 4.3 V until the current was less than or equal to 0.05 mA, and the charge capacity at this time was an initial charge capacity, denoted as C0. The button battery was stood for 2 min and discharged at the constant current rate of 0.1 C to 2.0 V, and the discharge capacity at this time was an initial discharge capacity, denoted as D0. Initial coulomb efficiency of the button battery (%) = (D0/C0) × 100%. Initial specific capacity of the button battery (mAh/g) = D0/m, where m represents a mass of the lithium manganese iron phosphate positive electrode active material. The test results were shown in Table 2.

**Table 1**

| Number | Manganese-iron molar ratio of precursor | | Yield |
|---|---|---|---|
| | Design value | Test value | |
| Example 1 | 1.503:1 | 1.513:1 | 99.1% |
| Example 2 | 1.503:1 | 1.492:1 | 98.6% |
| Example 3 | 4.000:1 | 4.030:1 | 99.2% |
| Example 4 | 2.333:1 | 2.326:1 | 99.5% |
| Example 5 | 1.000:1 | 0.998:1 | 99.6% |
| Example 6 | 2.333:1 | 2.334:1 | 99.4% |
| Comparative Example 1 | 2.333:1 | 1.980:1 | 83.0% |
| Comparative Example 2 | 4.000:1 | 3.850:1 | 86.0% |

**Table 2**

| Number | Initial coulomb efficiency | Initial specific capacity (mAh/g) |
|---|---|---|
| Example 1 | 99.1% | 154.6 |
| Example 2 | 89.0% | 122.5 |
| Example 3 | 98.3% | 148.3 |
| Example 4 | 99.5% | 154.2 |
| Example 5 | 98.9% | 155.8 |
| Example 6 | 99.0% | 153.0 |
| Comparative Example 1 | 91.2% | 99.0 |
| Comparative Example 2 | 91.3% | 110.6 |

From the test results in Table 1, it can be seen that the preparation method provided by the present application had a higher yield and can accurately control the composition of the obtained ammonium manganese iron phosphate precursor, making its composition easy to adjust, distribution of constituent elements more uniform, and batch stability and consistency higher. Compared with Examples 1-6, the actual value and design value of the manganese-iron molar ratio in the precursor prepared in Comparative Examples 1 and 2 were greatly different and the yield was lower. A possible reason is that manganese ions and iron ions cannot precipitate uniformly in the liquid-phase co-precipitation process, so that a large number of manganese ions and iron ions existed in the reaction system in a solution form. Further analysis by X-ray diffraction demonstrated that a large number of impurity peaks existed in the obtained precursor, indicating that a large quantity of impurities were generated in the precursor.

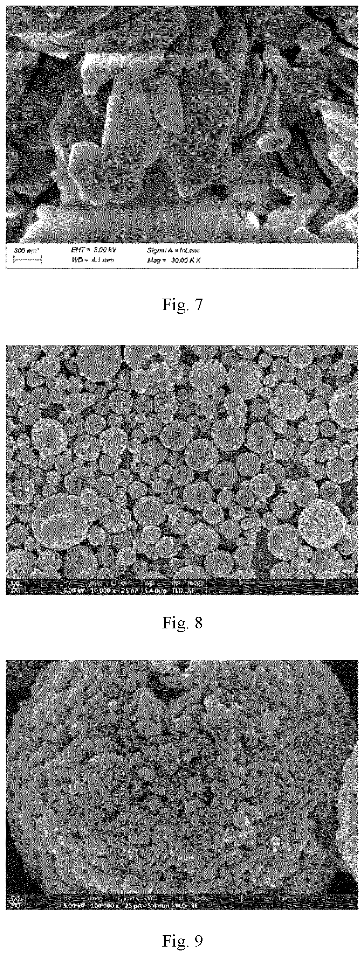

Fig. 7 is a scanning electron microscope (SEM) image of the ammonium manganese iron phosphate precursor prepared in Example 1. It can be seen from Fig. 7 that the ammonium manganese iron phosphate precursor particles were nano-sheets having a thickness of about 50 nm and a maximum length of about 1 µm-2 µm. Fig. 8 and Fig. 9 are scanning electron microscopy (SEM) images of the lithium manganese iron phosphate positive electrode active material prepared in Example 1 at magnifications of 10000 times and 100000 times, respectively. From Fig. 8 and Fig. 9, it can be seen that the lithium manganese iron phosphate positive electrode active material particles were of secondary spherical structures having a volume particle size Dv50 of about 6 µm, and primary particles forming the secondary spherical structures had a volume particle size Dv50 of about 100 nm -200 nm. Therefore, the preparation method provided by the present application can obtain an ammonium manganese iron phosphate precursor and a lithium manganese iron phosphate positive electrode active material with regular morphology, small particle size, and narrow particle size distribution.

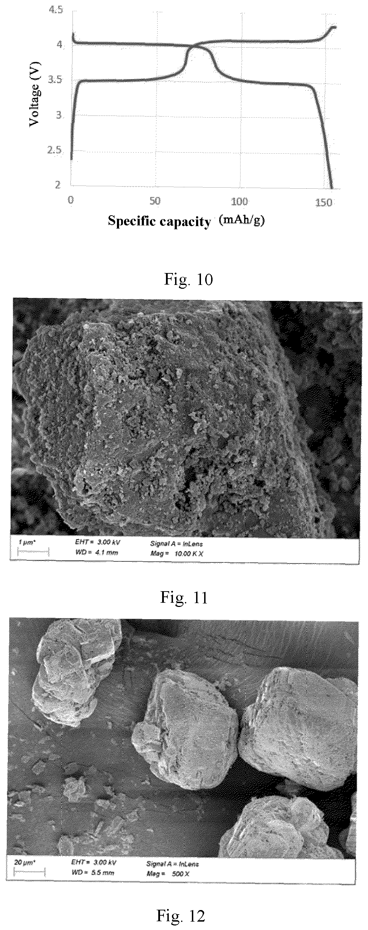

Fig. 10 is a first-cycle charge and discharge curve chart of the button battery prepared in Example 1. It can be seen from Fig. 10 that the lithium manganese iron phosphate positive electrode active material prepared by the preparation method provided in the present application can have high specific capacity and high initial coulomb efficiency.

Fig. 11 is a scanning electron microscope (SEM) image of the ammonium manganese iron phosphate precursor prepared in Example 2. It can be seen from Fig. 11 that when the amount of polyethylene glycol 600 was large and more than 15 wt%, the prepared ammonium manganese iron phosphate precursor particles had severe aggregation and no specific morphology, the electrochemical performance of the lithium manganese iron phosphate positive electrode active material prepared therefrom may also be affected, and the specific capacity and initial coulomb efficiency were reduced. A possible reason is that the reaction system was in a liquid reaction state instead of a solid reaction state.

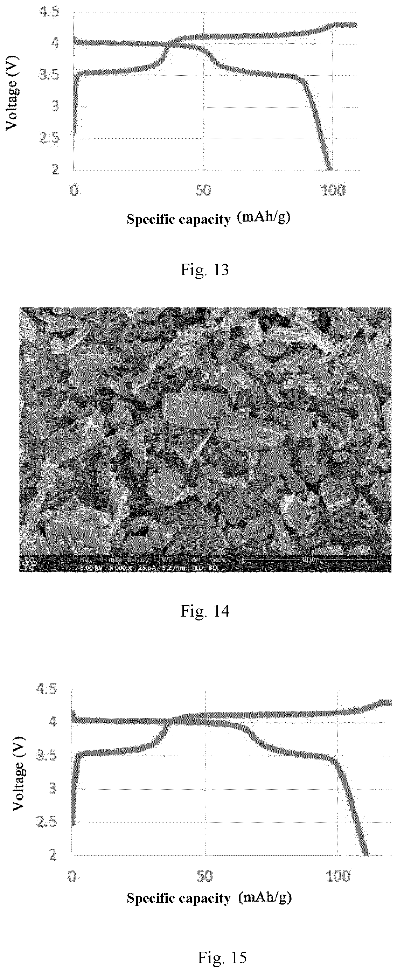

Fig. 12 is a scanning electron microscope (SEM) image of the ammonium manganese iron phosphate precursor prepared in Comparative Example 1, and Fig. 13 is a first-cycle charge and discharge curve chart of the button battery prepared in Comparative Example 1. From Fig. 12, it can be seen that the ammonium manganese iron phosphate precursor particles were irregular particles having a volume particle size Dv50 of about 50 µm. The excessive particle size was not conducive to uniform mixing with the lithium source, which is prone to result in crystal defects such as metal segregation and uneven element distribution during the preparation of the lithium manganese iron phosphate positive electrode active material. This affected the electrochemical performance of the lithium manganese iron phosphate positive electrode active material. From Fig. 13, it can be seen that the initial specific capacity of the button battery was only 99 mAh/g.

Fig. 14 is a scanning electron microscope (SEM) image of the manganese iron phosphate precursor prepared in Comparative Example 2, and Fig. 15 is a first-cycle charge and discharge curve chart of the button battery prepared in Comparative Example 2. From Fig. 14, it can be seen that the ammonium manganese iron phosphate precursor particles were irregular particles having a particle size of about 5 µm-25 µm. The wide particle size distribution affected the electrochemical performance of the subsequently prepared lithium manganese iron phosphate positive electrode active material. From Fig. 15, it can be seen that the initial specific capacity of the button battery was only 110.6 mAh/g.

It should be noted that the present application is not limited to the foregoing embodiments. The foregoing embodiments are only examples, and all embodiments within the scope of the technical solution of the present application that have substantially the same composition and effects as the technical concept fall within the technical scope of the present application. Moreover, various variations that can be conceived by those skilled in the art and other embodiments constituted by combining some elements of the embodiments without departing from the scope of the main purpose of the present application are further included in the scope of the present application.

## Claims

1. A method for preparing an ammonium manganese iron phosphate precursor, comprising the following steps: mixing and grinding metal source powder and phosphorus source powder to enable a low-heating-temperature solid-state reaction of the components, and then washing and drying the obtained product to obtain the ammonium manganese iron phosphate precursor, wherein the metal source comprises an iron source, a manganese source and an optional source of a doping element M, M represents doping elements at manganese and iron sites and optionally comprises one or more selected from Ni, Co, Mg, Zn, Ca, Ti, V and Cr, and the phosphorus source comprises triammonium phosphate.

2. The method according to claim 1, wherein
mixing and grinding time is from 0.25 h to 6 h, and optionally from 0.5 h to 6 h; and/or
a temperature for the low-heating-temperature solid-state reaction is from 20°C to 100°C, and optionally from 20°C to 30°C.

3. The method according to claim 1 or 2, wherein after the mixing and grinding, the method further comprises a step of standing for standing time from 0.5 h to 12 h, and optionally from 2 h to 5 h; and/or a sum of the mixing and grinding time and the standing time is greater than or equal to 1.5 h, and optionally greater than or equal to 2.5 h.

4. The method according to any one of claims 1-3, wherein a surfactant is further added to mix and grind with the metal source powder and the phosphorus source powder.

5. The method according to claim 4, wherein
the surfactant comprises polyethylene glycol; and/or
an addition amount of the surfactant is 15 wt% or less, based on a total weight of the metal source powder and the phosphorus source powder.

6. The method according to any one of claims 1-5, wherein before mixing and grinding metal source powder and phosphorus source powder to enable a low-heating-temperature solid-state reaction of the components, the method further comprises the following step: grinding the metal source powder and/or the phosphorus source powder separately, wherein
optionally, time for grinding the metal source powder is from 0.25 h to 1.5 h; and
optionally, time for grinding the phosphorus source powder is from 0.25 h to 1.5 h.

7. The method according to any one of claims 1-6, wherein a molar ratio of the metal source powder to the phosphorus source powder is 1: (1-3).

8. The method according to any one of claims 1-7, wherein
the washing comprises washing with water and/or washing with alcohol; and/or
the drying is vacuum drying; and/or
a drying temperature is from 60°C to 100°C; and/or
drying time is from 8 h to 20 h.

9. The method according to any one of claims 1-8, wherein
the iron source is a divalent iron salt, and optionally comprises one or more selected from ferrous chloride, ferrous nitrate, ferrous sulfate, and ferrous acetate; and/or
the manganese source is a divalent manganese salt, and optionally comprises one or more selected from manganous chloride, manganous nitrate, manganous sulfate, and manganous acetate; and/or
the source of the doping element M is a divalent salt of the doping element M, and optionally comprises one or more selected from a hydrochloride, a nitrate, a sulfate, and an acetate of the doping element M.

10. An ammonium manganese iron phosphate precursor prepared by the method according to any one of claims 1-9, having a chemical formula NH₄FeₓMn_{y}M_{1-x-y}PO₄, wherein 0 < x < 1, 0 < y < 1, 0 ≤ 1-x-y < 1, M represents doping elements at manganese and iron sites and optionally comprises one or more selected from Ni, Co, Mg, Zn, Ca, Ti, V and Cr, and the ammonium manganese iron phosphate precursor is electrically neutral.

11. The ammonium manganese iron phosphate precursor according to claim 10, wherein the ammonium manganese iron phosphate precursor has a nano-sheet morphology, with an average length of 50 nm-800 nm and an average thickness of ≤ 100 nm.

12. A method for preparing a lithium manganese iron phosphate positive electrode active material, comprising the following steps:
S1, mixing and grinding the ammonium manganese iron phosphate precursor prepared by the method according to any one of claims 1-9 or the ammonium manganese iron phosphate precursor according to any one of claims 10 and 11 with a lithium source, an optional source of a doping element N, an optional source of a doping element Q, and an optional source of a doping element in a predetermined ratio, and then performing spray drying granulation to obtain powder, wherein N represents a doping element at a lithium site and optionally comprises one or more selected from Zn, Al, Na, K, Mg, Nb, Mo and W, Q represents a doping element at a phosphorus site and optionally comprises one or more selected from B, S, Si and N, and R represents a doping element at an oxygen site and optionally comprises one or more selected from S, F, Cl and Br; and
S2, sintering the powder obtained in S1 to obtain the lithium manganese iron phosphate positive electrode active material.

13. The method according to claim 12, wherein in S1, a carbon source is further added for mixing and grinding, and the carbon source comprises one or more of organic carbon sources and inorganic carbon sources.

14. The method according to claim 12 or 13, wherein
in S1, grinding time is from 1 h to 6 h; and/or
in S1, a spray drying temperature is from 200°C to 250°C.

15. The method according to any one of claims 12-14, wherein in S2, the sintering comprises the following steps: pre-sintering the powder obtained in S1 at a low temperature of 350°C-500°C in an air atmosphere or a protective gas atmosphere, and then sintering the powder at a high temperature of 650°C-750°C in the protective gas atmosphere to obtain the lithium manganese iron phosphate positive electrode active material, wherein
optionally, time for the low-temperature pre-sintering is from 1 h to 6 h; and
optionally, time for the high-temperature sintering is from 3 h to 24 h.

16. The method according to claim 15, wherein after the low-temperature pre-sintering and before the high-temperature sintering, the method further comprises grinding and spray drying granulation steps.

17. A lithium manganese iron phosphate positive electrode active material prepared by the method according to any one of claims 12-16, having a chemical formula LiₐN_{b}FeₓMn_{y}M_{1-x-y}P₁₋ₘQₘO₄₋ₙRₙ, wherein M represents doping elements at manganese and iron sites and optionally comprises one or more selected from Ni, Co, Mg, Zn, Ca, Ti, V and Cr, N represents a doping element at a lithium site and optionally comprises one or more selected from Zn, Al, Na, K, Mg, Nb, Mo and W, Q represents a doping element at a phosphorus site and optionally comprises one or more selected from B, S, Si and N, and R represents a doping element at an oxygen site and optionally comprises one or more selected from S, F, Cl and Br; 0.9 ≤ a ≤ 1.1; 0 ≤ b ≤ 0.1, and optionally, 0.001 ≤ b ≤ 0.1; 0 < x < 1, and optionally, 0.20 ≤ x ≤ 0.50; 0 < y < 1, and optionally, 0.50 ≤ y ≤ 0.80; 0 ≤ 1-x-y < 1, and optionally, 0.001 ≤ 1-x-y ≤ 0.1; 0 ≤ m < 1, and optionally, 0.001 ≤ m ≤ 0.1; 0 ≤ n < 4, and optionally, 0.001 ≤ n ≤ 0.1; and the lithium manganese iron phosphate positive electrode active material is electrically neutral.

18. A secondary battery, comprising the lithium manganese iron phosphate positive electrode active material prepared by the method according to any one of claims 12-16 or the lithium manganese iron phosphate positive electrode active material according to claim 17.
